# FASCICULE DE BREVET EUROPEEN

(11) **EP 4 132 895 B1**
(45) Date de publication et mention de la délivrance du brevet: **20.03.2024**
(21) Numéro de dépôt: 21715938.3
(22) Date de dépôt: 08.04.2021
(51) Int. Cl.: C04B 28/02, C04B 24/12

(54) **COMPOSITION D'ALCANOLAMINES PARTIELLEMENT PROTONÉES ET UTILISATION DANS UN BROYEUR**
TEILWEISE PROTONIERTE ALKANOLAMINZUSAMMENSETZUNG UND VERWENDUNG IN EINER MÜHLE
PARTIALLY PROTONATED ALKANOLAMINE COMPOSITION, AND USE IN A MILL

(30) Priorité: 09.04.2020 FR 2003563
(43) Date de publication de la demande: 15.02.2023
(73) Titulaire: CHRYSO, 92400 Courbevoie (FR)
(72) Inventeur: JACHIET, Marie, 91150 ETAMPES (FR); PELLERIN, Bruno, 77210 AVON (FR)
(74) Mandataire: Lavoix
(86) Numéro de dépôt international: PCT/EP2021/059175
(87) Numéro de publication internationale: WO 2021/204942

(56) Documents cités:
- WO-A1-2009/060405
- WO-A1-2019/025365
- FR-A1- 3 002 162
- US-A- 5 084 103

## Description

La présente invention concerne des compositions d'alcanolamines partiellement protonées et leur utilisation dans des procédés de broyage, notamment dans les procédés de broyage de liant hydraulique, notamment clinker.

Il est connu d'utiliser les alcanolamines lors du broyage du clinker. Les alcanolamines sont également connues pour améliorer les résistances mécaniques des compositions hydrauliques à base de ciment.

Il a par conséquent été proposé de combiner ces effets et d'utiliser les alcanolamines au moment du broyage du liant hydraulique, notamment ciment, afin de bénéficier des propriétés de mouture des alcanolamines tout en introduisant dans le liant hydraulique des actifs permettant l'amélioration des résistances mécaniques lors de la préparation des compositions de liant hydraulique.

Cependant, certaines alcanolamines, notamment la triisopropanolamine (TIPA), utilisées pendant le broyage, vont être dégradées par la température et ne vont donc plus être disponibles pour participer à l'obtention de bonnes résistances mécaniques lors de la préparation des compositions de liant hydraulique. Pour pallier ce problème, il a été envisagé de mettre une quantité plus importante d'alcanolamine afin de compenser leur dégradation. Cependant, l'augmentation de la concentration en alcanolamine dans certains broyeurs se traduit par une trop forte efficacité du broyage et la surfluidification de la poudre de ciment entraîne une vidange du broyeur, ce qui n'est pas souhaité.

Il est également connu de FR 3 002 162 l'utilisation d'AMP (2-amino-2-méthyl-propanol), notamment sous forme de sel organique, pendant le broyage du clinker. Cependant, il en résulte une augmentation de la fluidité du ciment et donc un broyage non suffisant du clinker.

Il y a donc un intérêt à fournir un procédé permettant d'utiliser les alcanolamines pendant le broyage d'un liant hydraulique, notamment ciment, tout en ne dégradant pas les conditions de broyage, notamment en ne vidant (ou ne vidangeant) pas le broyeur.

Il y a également un intérêt à fournir une composition d'alcanolamines partiellement protonées pouvant être utilisée comme agent de broyage. Il y a également un intérêt à fournir un tel procédé qui permette de réduire la fluidité du liant hydraulique et par conséquent d'augmenter son temps de passage dans le broyeur, pour obtenir une poudre plus fine permettant également l'obtention de bonnes résistances mécaniques.

Il y a également un intérêt à fournir un procédé permettant lors de l'étape de broyage du liant hydraulique d'apporter les composés nécessaires à l'amélioration des propriétés de résistances mécaniques notamment de résistances mécaniques à 28 jours, des compositions de liant hydraulique, tout en ne dégradant pas les conditions de broyage, notamment en ne vidant pas le broyeur.

Un objectif de la présente invention est donc de fournir une composition d'alcanolamines pouvant être utilisée dans un procédé de broyage.

Un autre objectif de l'invention est de fournir un procédé permettant de stabiliser les alcanolamines utilisées dans un broyeur.

Un autre objectif de l'invention est de fournir un tel procédé permettant dans le même temps de conserver un impact sur l'amélioration des résistances mécaniques, notamment à 28 jours, des compositions de liant hydraulique.

Un autre objectif encore de la présente invention est de fournir un moyen permettant de contrôler les performances d'agent de mouture des alcanolamines tout en conservant les propriétés d'amélioration des résistances mécaniques, notamment à 28 jours lors de la préparation des compositions de liant hydraulique. L'objet de la présente invention est particulièrement avantageux dans toutes les situations où les performances de broyage requises sont faibles (nature du clinker, cobroyage du clinker avec des matériaux tendres - par exemple filler calcaire, pouzzolanes naturelles, argiles calcinées -, broyeurs peu performants, broyeurs ouverts sans système de séparation, systèmes de broyage fermés avec par exemple des séparateurs à flux d'air constant, procédé avec transfert du ciment par bande transporteuse inclinée, élévateurs à godets ouverts, filtres à poussières peu performants ou proches de la saturation (pression différentielle élevée, filtres à manches usés)).

L'objet de la présente invention est particulièrement avantageux lors du cobroyage de clinker et de calcaire pour la fabrication de CEM II/A ou CEM II/B LL, qui nécessitent pour l'amélioration des résistances mécaniques à 28 jours des dosages élevés en amine (par exemple 120 g de triisopropanolamine (TIPA) par tonne de ciment). Lorsque de tels dosages sont utilisés sur certaines usines, il est observé une vidange rapide du broyeur ainsi que des phénomènes d'empoussièrements critiques à la sortie du broyeur et au niveau de l'élévateur.

De manière surprenante il a été observé que, l'utilisation d'amines sous forme de sels, permet de contrôler les performances de mouture des amines, tout en conservant l'intégralité des performances d'amélioration des résistances mécaniques à 28 jours.

Tous ces objectifs sont remplis par la présente invention qui concerne une composition (C) comprenant, ou de préférence constituée de, entre 10 et 99 % en poids d'alcanolamine (A) secondaire ou tertiaire sous forme de sel, de préférence d'un sel d'acide inorganique, et entre 1 et 90 % en poids de l'alcanolamine (A) non salifiée.

De préférence, la composition (C) comprend, ou de préférence est constitué de, entre 50 et 99 % en poids d'alcanolamine (A) secondaire ou tertiaire sous forme de sel, de préférence d'un sel d'acide inorganique, et entre 1 et 50 % en poids de l'alcanolamine (A) non salifiée.

La présente invention concerne également un procédé d'utilisation d'alcanolamine (A), de préférence alcanolamine secondaire ou tertiaire pour le broyage d'au moins un liant hydraulique, de préférence ciment, comprenant :
- La mise sous forme partiellement salifiée, de préférence à l'aide d'acide inorganique, de l'alcanolamine (A) de façon à obtenir une composition (C) ;
- L'ajout de la composition (C) dans un broyeur.

Le procédé comprend en outre de préférence le broyage dudit liant hydraulique.

De préférence, la présente invention concerne un procédé d'utilisation d'alcanolamine (A) secondaire ou tertiaire, pour le broyage d'au moins un liant hydraulique comprenant :
- La mise sous forme partiellement salifiée, à l'aide d'acide inorganique, de l'alcanolamine (A) de façon à obtenir une composition (C) ;
- L'ajout de la composition (C) dans un broyeur.

Le procédé comprend en outre de préférence le broyage dudit liant hydraulique.

Dans la composition (C), l'alcanolamine (A) sous forme de sel et l'alcanolamine (A) non salifiée peuvent être différentes, de préférence l'alcanolamine (A) sous forme de sel et l'alcanolamine (A) non salifiée sont identiques.

De préférence, l'alcanolamine (A) est une alcanolamine de formule (I) N(R¹OH)(R²)(R³) (I) dans laquelle les R¹, identiques ou différents, représentent un groupe alkyle linéaire ou ramifié comprenant de 1 à 10 atomes de carbone, de préférence de 1 à 5 atomes de carbone, R² représente H ou un groupe R^{L}-OH, R³ représente H, un groupe alkyle linéaire ou ramifié comprenant de 1 à 10 atomes de carbone, de préférence de 1 à 5 atomes de carbone, un groupe R⁴-OH dans lequel R⁴ représente un groupe alkyle linéaire ou ramifié comprenant de 1 à 10 atomes de carbone, de préférence de 1 à 5 atomes de carbone, ou un groupe (alkyle)-N(alkyl-OH)₂, l'alkyl étant linéaire ou ramifié et comprenant de 1 à 5 atomes de carbone, de préférence (CH₂-CH₂)-N(CH₂-CH₂-OH)₂, au moins l'un de R² et R³ étant différent de H.

De préférence, l'alcanolamine (A) est une alcanolamine de formule (I) N(R¹OH)( R¹OH)(R³) (I) dans laquelle les R¹, identiques ou différents, représentent un groupe alkyle linéaire ou ramifié comprenant de 1 à 10 atomes de carbone, de préférence de 1 à 5 atomes de carbone, R³ représente H, un groupe alkyle linéaire ou ramifié comprenant de 1 à 10 atomes de carbone, de préférence de 1 à 5 atomes de carbone, un groupe R⁴-OH dans lequel R⁴ représente un groupe alkyle linéaire ou ramifié comprenant de 1 à 10 atomes de carbone, de préférence de 1 à 5 atomes de carbone.

Le procédé de la présente invention ne couvre pas l'utilisation de sels d'acide acétique. Le procédé de la présente invention ne couvre pas l'utilisation d'AMP (2-amino-2-méthyl-propanol).

La présente invention concerne également un procédé d'amélioration des résistances mécaniques d'une composition de liant hydraulique comprenant la mise en oeuvre d'une composition (C), lors du broyage du liant hydraulique. De façon particulièrement avantageuse, le procédé permet l'amélioration des résistances mécaniques de la composition de liant hydraulique sans affecter les performances du broyage de liant hydraulique, notamment clinker.

De préférence, dans le cadre de l'invention, lorsqu'il est fait référence aux résistances mécaniques ce sont de préférence les résistances mécaniques à 28 jours.

Les sels inorganiques d'alcanolamine (A), notamment d'alcanolamine de formule (I), sont choisis parmi les sels d'halogénure d'acide, les sels d'acide sulfurique, d'acide phosphorique, d'acide phosphonique, d'hydrogenosulfates, de carbonates ou d'hydrogénocarbonates.

De manière préférée, le sel d'alcanolamine est un sel d'acide sulfurique, d'acide phosphorique ou d'acide phosphonique, de préférence d'acide sulfurique.

De manière préférée, le sel d'alcanolamine est un sel d'halogénure d'acide ou d'acide sulfurique. Notamment, un sel d'acide chlorhydrique.

Le procédé de la présente invention peut être appliqué à tout type d'alcanolamine (A), de préférence secondaire ou tertiaire, de préférence de formule (I), notamment à tout type d'alcanolamine (A) secondaire ou tertiaire de formule (I) utilisée dans les broyeurs, notamment dans les broyeurs de clinker et de liants hydrauliques. Plus particulièrement on peut citer la triisopropanolamine (TIPA), la diisopropanolamine (DIPA), la diéthanolisopropanolamine (DEIPA), l'éthanoldiisopropanolamine (EDIPA), N,N,N',N'-tetrakis(2-hydroxyethyl)ethylenediamine (THEED) et la methyldiéthanolamine (MDEA). De préférence, l'alcanolamine est choisie parmi la triisopropanolamine (TIPA), la diéthanolisopropanolamine (DEIPA) et l'éthanoldiisopropanolamine (EDIPA). De préférence, l'alcanolamine est la triisopropanolamine (TIPA).

La préparation de la composition (C) est réalisée par mélange entre l'alcanolamine (A) et l'acide avec un excès d'alcanolamine tel que le rapport entre le nombre de moles d'acide et le nombre de protons de l'acide soit inférieur au rapport entre le nombre de moles d'amines et le nombre de fonctions azote dans l'amine. La réaction pouvant être exothermique il peut être nécessaire de refroidir le milieu lors de la réaction. Pour cette raison, la synthèse de la composition (C) est de préférence réalisée dans un récipient en verre immergé dans un bain d'eau froide et la température ainsi que le pH sont mesurés en continu.

La présente invention, concerne également une méthode de diminution de la fluidité du liant hydraulique dans un broyeur comprenant la mise en oeuvre d'une composition (C) selon l'invention lors du broyage du liant hydraulique.

Dans le cadre de la présente invention, tout type de broyeur peut être utilisé. Notamment, l'invention concerne la mise en oeuvre dans des broyeurs verticaux, des broyeurs à boulets, des broyeurs à cylindres, ouverts sans système de séparation, systèmes de broyage fermés avec séparateurs à flux d'air constant ou non, procédé avec transfert du ciment par bande transporteuse inclinée, élévateurs à godets ouverts, filtres à poussières peu performants ou proches de la saturation (pression différentielle élevée, filtres à manches usés). De préférence, le broyeur est un broyeur à boulets, ou un broyeur vertical.

L'objet de la présente invention est particulièrement avantageux lors de co-broyages de clinker et d'additions minérales pour la fabrication de CEM II/A ou CEM II/B ou CEM III, qui nécessitent pour l'amélioration des résistances mécaniques à 28 jours, des dosages élevés en amine (par exemple 120 g de TIPA par tonne de ciment). Lorsque de tels dosages sont utilisés sur certaines usines, il est observé une vidange rapide du broyeur, des phénomènes d'empoussièrements critiques à la sortie du broyeur et au niveau de l'élévateur.

La présente invention traite du broyage de tout type de liant hydraulique et notamment de clinker et/ou d'additions minérales.

Dans le cadre de la présente invention, on entend par le terme « liant hydraulique » tout composé ayant la propriété de s'hydrater en présence d'eau et dont l'hydratation permet d'obtenir un solide ayant des caractéristiques mécaniques, notamment un ciment tel qu'un ciment Portland, ciment alumineux, ciment pouzzolanique ou encore un sulfate de calcium anhydre ou semi-hydraté. Le liant hydraulique peut être un ciment selon la norme EN197-1 (2001) et notamment un ciment Portland, des additions minérales, notamment laitiers, ou un ciment comprenant des additions minérales.

On entend par « ciment » un ciment selon la norme EN 197-1 (2001) et notamment un ciment de type CEM I, CEM II, CEM III, CEM IV ou CEM V selon la norme Ciment NF EN 197-1 (2012). Le ciment peut comprendre des additions minérales.

L'expression « additions minérales » désigne les laitiers (tels que définis dans la norme Ciment NF EN 197-1(2012) paragraphe 5.2.2), les laitiers d'aciérie, les matériaux pouzzolaniques (tels que définis dans la norme Ciment NF EN 197-1(2012) paragraphe 5.2.3), les cendres volantes (telles que définies dans la norme Ciment NF EN 197-1(2012) paragraphe 5.2.4), les schistes calcinés (tels que définis dans la norme Ciment NF EN 197-1 (2012) paragraphe 5.2.5), les calcaires (tels que définis dans la norme Ciment NF EN 197-1(2012) paragraphe 5.2.6) ou encore les fumées de silices (telles que définies dans la norme Ciment NF EN 197-1(2012) paragraphe 5.2.7) ou leurs mélanges. D'autres ajouts, non actuellement reconnus par la norme Ciment NF EN 197-1(2012), peuvent aussi être utilisés. Il s'agit notamment des métakaolins, tels que les métakaolins de type A conformes à la norme NF P 18-513 (août 2012) ou des argiles calcinées, des additions siliceuses, telles que les additions siliceuses de minéralogie Qz conformes à la norme NF P 18-509 (septembre 2012), des alumino-silicates notamment de type géopolymères inorganiques.

De façon particulièrement avantageuse, les inventeurs ont montré que la mise sous forme partiellement salifiée de l'alcanolamine selon l'invention permettait de diminuer sa tension de vapeur et par conséquent de la protéger de la dégradation, notamment due à la température, dans le broyeur. Les inventeurs ont montré que contre toute attente, malgré cette mise sous forme partiellement salifiée, l'alcanolamine conservait ses propriétés d'amélioration des propriétés mécaniques d'une composition de liant hydraulique, notamment ses propriétés d'amélioration des résistances mécaniques, notamment des résistances mécaniques à 28 jours. Par ailleurs, et de manière surprenante, les inventeurs ont montré que la mise sous forme partiellement salifiée d'acide inorganique, contrairement aux exemples connus de la littérature avec des sels d'acide organique, permettait de contrôler le temps de séjour dans le broyeur et de moduler la fluidité de la poudre de liant hydraulique.

Ainsi, la présente invention permet de façon particulièrement avantageuse d'ajouter l'alcanolamine au moment du broyage sans qu'elle ne se dégrade et tout améliorant le broyage et en conservant ses propriétés d'amélioration des propriétés mécaniques des compositions de liants hydrauliques.

De préférence, la composition (C) est utilisée lors du broyage dans une teneur de 0,003 à 0,025 % en poids du liant hydraulique, de préférence de 0,005 à 0,015 %.

De façon particulièrement avantageuse, la composition (C) mise en oeuvre lors du broyage peut être utilisée en combinaison avec d'autres additifs généralement utilisés dans les compositions hydrauliques ou lors du broyage du liant hydraulique, on peut notamment citer les alcanolamines autres que celles de formule (I), les sels tels que le chlorure de sodium, le chlorure de calcium, le thiocyanate de sodium, le thiocyanate de calcium, le nitrate de sodium et le nitrate de calcium et leurs mélanges, les glycols, les glycérols, les adjuvants réducteurs d'eau et haut réducteurs d'eau, les tensioactifs, des acides carboxyliques tels que les acides acétique, adipique, gluconique, formique, oxalique, citrique, maléique, lactique, tartrique, malonique et leurs mélanges.

La composition (C) de l'invention peut également être mise en oeuvre en combinaison avec des retardateurs de prise.

Dans le cadre de la présente invention, parmi les retardateurs de prise on peut notamment citer les retardateurs de prise à base de sucre, de mélasses ou de vinasse.

De préférence, les adjuvants réducteurs d'eau et haut réducteurs d'eau sont choisis parmi :
- Les sels sulfonés de polycondensés de naphtalène et de formaldéhyde, couramment appelés les polynaphtalènes sulfonates ou encore les superplastifiants à base de naphtalène ;
- Les sels sulfonés de polycondensés de mélamine et de formaldéhyde, appelés couramment les superplastifiants à base de mélamine ;
- Les lignosulfonates ;
- Le gluconate de sodium et le glucoheptonate de sodium ;
- Les polyacrylates ;
- Les polyaryléthers (PAE) ;
- Les produits à base d'acides polycarboxyliques, notamment les copolymères peignes polycarboxylate, qui sont des polymères ramifiés dont la chaîne principale porte des groupes carboxyliques et dont les chaînes latérales sont composées de séquences de type polyéther, en particulier le polyoxyde d'éthylène, comme par exemple le poly [acide (méth)acrylique - greffé - polyoxyde d'éthylène]. Les superplastifiants des gammes CHRYSO^{®}Fluid Optima, CHRYSO^{®}Fluid Premia et CHRYSO^{®}Plast Oméga commercialisés par CHRYSO peuvent notamment être utilisés ;
- Les produits à base de polyphosphonates polyalkoxylés notamment décrits dans le brevet EP 0 663 892 (par exemple CHRYSO^{®}Fluid Optima 100).

De façon particulièrement avantageuse, la composition (C) mise en oeuvre lors du broyage peut être utilisée en combinaison avec un ou plusieurs anti-mousses notamment choisis parmi les amines grasses éthoxylées. Les inventeurs ont notamment montré que la mise sous forme de sel de l'alcanolamine permet d'obtenir une zone de pH permettant la solubilisation des amines grasses éthoxylées tout en conservant leur efficacité dans les applications notamment béton qui sont dans des zones de pH où elles deviennent actives.

La présente invention concerne également une composition comprenant :
- Au moins un liant hydraulique ;
- Une composition (C) telle que décrite ci-dessus.

La composition peut comprendre en outre au moins un additif tel que décrit ci-dessus.

La présente invention concerne également une composition hydraulique comprenant :
- De l'eau ;
- Au moins un liant hydraulique ;
- Une composition (C) ;
- Un granulat.

La composition hydraulique peut comprendre en outre au moins un additif tel que décrit ci-dessus.

Par « granulats », on entend un ensemble de grains minéraux de diamètre moyen compris entre 0 et 125 mm. Selon leur diamètre, les granulats sont classés dans l'une des six familles suivantes : fillers, sablons, sables, graves, gravillons et ballast (norme XP P 18-545). Les granulats les plus utilisés sont les suivants :
- Les fillers, qui ont un diamètre inférieur à 2 mm et pour lesquels au moins 85 % des granulats ont un diamètre inférieur à 1,25 mm et au moins 70 % des granulats ont un diamètre inférieur à 0,063 mm ;
- Les sables de diamètre compris entre 0 et 4 mm (dans la norme 13-242, le diamètre pouvant aller jusqu'à 6 mm) ;
- Les graves de diamètre supérieur à 6,3 mm ;
- Les gravillons de diamètre compris entre 2 et 63 mm ;
- Les sables sont donc compris dans la définition de granulat selon l'invention ;
- Les fillers peuvent notamment être d'origine calcaire ou dolomitique.

La composition hydraulique peut également comprendre d'autres additifs connus de l'homme du métier, par exemple une addition minérale et/ou des additifs, par exemple un additif anti-entraînement d'air, un agent antimousse, un accélérateur ou retardateur de prise, un agent modificateur de rhéologie, un autre fluidifiant (plastifiant ou superplastifiant), notamment un superplastifiant, par exemple un superplastifiant CHRYSO^{®}Fluid Premia 180 ou CHRYSO^{®}Fluid Premia 196.

La présente invention va maintenant être décrite à l'aide d'exemples non limitatifs.

### EXEMPLE 1 :

Dans cet exemple, un mélange de triisopropanolamine (TIPA) et du sel d'acide chlorhydrique de triisopropanolamine est mis en oeuvre. Il est obtenu en mélangeant la triisopropanolamine avec différentes concentrations d'acide chlorhydrique de manière à obtenir les rapports molaires TIPA:HCl de 1:0,70 et 1:0,85. Le ratio molaire d'amine et d'acide est donc non stoechiométrique, avec un excès d'amine par rapport à l'acide, conduisant à une protonation partielle de l'amine.

Pour obtenir un mélange avec un rapport molaire TIPA:HCI de 1:0,70, une masse de 156,3 g de triisopropanolamine à une concentration massique de 64 % dans l'eau est mélangée avec 36,1 g d'acide chlorhydrique à 37 %massique. Par réaction acido-basique entre l'amine et l'acide, 70 %massique de TIPA est convertie en sel d'acide chlorhydrique de triisopropanolamine, alors que 30 %massique de TIPA demeure sous forme non protonée. De même, pour obtenir un rapport molaire TIPA:HCI de 1:0,85, une masse de 156,3 g de triisopropanolamine à une concentration massique de 64 % dans l'eau est mélangée avec 43,79 g d'acide chlorhydrique à 37 %massique. Par réaction acido-basique entre l'amine et l'acide, 85 %massique de TIPA est convertie en sel d'acide chlorhydrique de triisopropanolamine, alors que 15 %massique de TIPA demeure sous forme non protonée.

Les deux mélanges obtenus se présentent sous forme de solution limpide. Par titrage acido-basique inverse, il est possible de déterminer la quantité d'amine protonée (TIPA+HCl) présente dans chaque mélange. Si l'on ajoute de l'hydroxyde de sodium (0.1 mol/L) au mélange de TIPA+HCl et TIPA, un saut de pH est relevé à un volume d'équivalence de soude caractéristique de la constante d'acidité du composé chimique (TIPA/TIPA+HCl). Le volume de soude introduit à l'équivalence permet donc de déterminer la concentration en sel d'acide chlorhydrique de triisopropanolamine dans la solution.

### EXEMPLE 2 :

Selon le même type de réaction chimique, il est possible de préparer un mélange de diéthanolisopropanolamine et du sel d'acide chlorhydrique de diéthanolisopropanolamine (DEIPA) à différents ratios molaires. Pour obtenir un mélange avec un rapport molaire DEIPA:HCl de 1:0,70, une masse de 117,6 g de diéthanolisopropanolamine à une concentration massique de 85 % dans l'eau est mélangée avec 51,8 g d'acide chlorhydrique à 37 %massique. Pour obtenir un mélange avec un rapport molaire DEIPA:HCl de 1:0,85, une masse de 117,6 g de diéthanolisopropanolamine à une concentration massique de 85 % dans l'eau est mélangée avec 62,9 g d'acide chlorhydrique à 37 %massique. Après réaction acido-basique, ces formules contiennent respectivement 70 et 85 %massique de diéthanolisopropanolamine sous forme protonée (DEIPA+HCl). La teneur en sel d'acide chlorhydrique de diéthanolisopropanolamine (DEIPA+HCl) dans ces mélanges peut être confirmée par titrage acido-basique inverse avec de la soude.

### EXEMPLE 3 :

Selon le même type de réaction chimique, il est possible de préparer un mélange de triisopropanolamine (TIPA) et du sel d'acide sulfurique de triisopropanolamine avec un taux de protonation de triisopropanolamine inférieur à 100 %massique. Pour obtenir une solution contenante 70 %massique de triisopropanolamine protonée, il faut mélanger 117,6 g de triisopropanolamine à une concentration massique de 64 % dans l'eau avec 18,9 g d'acide sulfurique à 95 %massique. La formule obtenue contient alors un mélange de TIPA+H₂SO₄ et TIPA. La teneur en amine protonée dans ce mélange peut de nouveau être confirmée par titrage acido-basique inverse avec de la soude.

### EXEMPLE 4 :

Sur un ciment CEM II/A-V 42,5 N qui contient 15 % massique de cendres volantes avec une cible de surface spécifique Blaine de 4000 cm²/g, un dosage de 90 ppm de TIPA permet d'augmenter le débit du broyeur de ciment de 11 %. En revanche, un dosage de 120 ppm de TIPA crée des effets néfastes en surfluidifiant la poudre de ciment qui devient très volatile. La TIPA partiellement protonée (TIPA:HCl = 1:0,85) sous forme de TIPA+HCI ne donne pas d'impact négatif sur le broyage du ciment (pas de surfluidification). Elle permet même une légère augmentation du débit broyeur et conduit à des résistances mécaniques améliorées.

**[Tableau 1]**

| Descriptif | Dosage (ppm) | Débit broyeur (tph) | Rc 2 j (MPa) | Rc 28 j (MPa) |
|---|---|---|---|---|
| Référence | 0 | 70 | 24,0 | 55,2 |
| TIPA | 90 | 78 | 24,5 | 61,3 |
| TIPA | 120 ppm | NA* | - | - |
| TIPA+HCl (TIPA :HCl = 1 :0,85) | 139 ppm** | 80 | 25,2 | 63,0 |

| | | | | |
|---|---|---|---|---|
| * Vidange du broyeur ** Equivalent à 120 ppm de TIPA + 19 ppm de HCl. | | | | |

Cet exemple met en évidence le fait que, dans le broyeur, une teneur de TIPA trop élevée impacte l'efficacité du broyage et amène à une baisse des performances mécaniques, la mise sous forme partielle de sel de la TIPA permet de s'affranchir de ces inconvénients.

### EXEMPLE 5 :

Dans un broyeur vertical à 2 rouleaux « à semi-échelle », on produit 200 kilogrammes par heure d'un ciment de type CEM I pour obtenir un ciment de finesse cible à une surface spécifique Blaine de 4000 cm²/g. En présence d'un activateur comprenant de la TIPA à différents taux de protonation, la performance du broyeur (débit de production en kilogrammes par heure) est suivie. A un dosage en TIPA de 400 ppm, des effets néfastes de surfluidification du ciment peuvent apparaitre à cause de la poudre qui devient très volatile, ce qui peut être suivi par la mesure de la pression entre l'entrée de filtre et la sortie du filtre broyeur.

L'ajout de 400 ppm de TIPA non protonée dans le ciment permet d'augmenter le débit du broyeur par rapport à la référence sans additif, tout en maintenant une surface spécifique Blaine du ciment à la cible visée de 4000 cm²/g. L'amine facilite donc le broyage du ciment et permet d'augmenter les performances du broyeur. Néanmoins, une augmentation significative de la pression au niveau du filtre est relevée par rapport à la référence sans additif. Cette amine non protonée favorise le poussiérage et la mise en suspension de la poudre dans le broyeur, ce qui impacte le procédé de broyage. L'utilisation d'une amine protonée partiellement (à 50 %massique) ou totalement (à 100 %massique) sous forme de sel d'acide chlorhydrique (TIPA+HCI) permet de réduire cette pression différentielle. Ainsi, plus le taux de protonation de l'amine augmente, moins le poussiérage dans le broyeur est marqué. De plus, la TIPA+HCI aux 2 taux de protonation permet d'augmenter le débit du broyeur ainsi que la surface spécifique du ciment par rapport à la TIPA, avec un effet d'autant plus marqué que le taux de protonation est élevé. L'utilisation d'une amine sous forme de sel d'acide chlorhydrique permet donc d'améliorer les performances du broyeur avec un effet modulable selon le taux de protonation. Enfin, les propriétés mécaniques du ciment ne sont pas modifiées par l'ajout de la TIPA+HCI aux différents taux de protonation. A 2 jours, les résistances mécaniques des ciments adjuvantés sont équivalentes à celles de la référence. A 7 jours, un léger gain de résistance en compression est relevé, grâce à l'effet activateur de TIPA, effet visible sous sa forme non protonée, protonée à 50 %massique et protonée à 100 %massique.

| Descriptif | Dosage (ppm) | Débit broyeur (kg/h) | Surface spécifique Blaine (cm²/g) | Pression (mBar) en entrée de filtre - Sortie broyeur | Rc 2 j (MPa) | Rc 7 j (MPa) |
|---|---|---|---|---|---|---|
| Référence | 0 | 178 | 4017 | 2,9 | 35,6 | 51,6 |
| TIPA (0 %massique protonation de TIPA) | 400 | 195 | 3915 | 4,1 | 35,3 | 53,4 |
| TIPA+HCl (50 %massique protonation de TIPA) | 438* | 201 | 3937 | 3,8 | 35,7 | 53,1 |
| TIPA+HCl (100 %massique protonation de TIPA) | 476** | 211 | 3994 | 3,7 | 34,6 | 52,5 |

| | | | | | | |
|---|---|---|---|---|---|---|
| * Equivalent à 400 ppm de TIPA + 38 ppm de HCl ** Equivalent à 400 ppm de TIPA + 76 ppm de HCl. | | | | | | |

Cet exemple met en évidence le fait que, dans le broyeur vertical, l'utilisation de TIPA sous forme partielle de sel d'acide chlorhydrique (TIPA+HCI) à la place de TIPA permet d'améliorer l'efficacité de broyage se traduisant par une diminution de la pression différentielle du filtre, une augmentation de la surface spécifique du ciment et ainsi une augmentation du débit du broyeur. Plus le taux de protonation de la TIPA par l'acide chlorhydrique est élevé, plus cet effet bénéfique sur la performance du broyeur est visible. De plus, les performances mécaniques du ciment restent équivalentes à celle de la référence à 2 jours voire sont légèrement supérieures à la référence à 7 jours en présence de TIPA+HCI (protonation à 50 et 100 %massique).

## Revendications

1. Composition (C) comprenant entre 10 et 99 % en poids d'alcanolamine (A) secondaire ou tertiaire sous forme de sel, de préférence d'un sel d'acide inorganique, et entre 1 et 90 % en poids de l'alcanolamine (A) non salifiée.

2. Composition (C) selon la revendication 1 comprenant entre 50 et 99% en poids d'alcanolamine (A) secondaire ou tertiaire sous forme de sel, de préférence d'un sel d'acide inorganique, et entre 1 et 50 % en poids de l'alcanolamine (A) non salifiée.

3. Composition selon la revendication 1 ou 2, dans laquelle le sel d'alcanolamine est un sel d'halogénure d'acide ou un sel d'acide sulfurique, d'acide phosphorique, d'acide phosphonique ou hydrogénosulfate, de carbonate ou d'hydrogénocarbonate.

4. Composition selon l'une quelconque des revendications 1 à 3, dans laquelle le sel d'alcanolamine est un sel d'halogénure d'acide ou un sel d'acide sulfurique.

5. Composition selon l'une quelconque des revendications 1 à 4, dans laquellle le sel d'alcanolamine est un sel d'acide chlorhydrique.

6. Composition selon l'une quelconque des revendications 1 à 5, dans laquelle l'alcanolamine est une alcanolamine de formule (I) N(R¹OH)(R²)(R³) (I) dans laquelle les R¹, identiques ou différents, représentent un groupe alkyle linéaire ou ramifié comprenant de 1 à 10 atomes de carbone, de préférence de 1 à 5 atomes de carbone, R² représente H ou un groupe R^{L}-OH, R³ représente H, un groupe alkyle linéaire ou ramifié comprenant de 1 à 10 atomes de carbone, de préférence de 1 à 5 atomes de carbone, un groupe R⁴-OH dans lequel R⁴ représente un groupe alkyle linéaire ou ramifié comprenant de 1 à 10 atomes de carbone, de préférence de 1 à 5 atomes de carbone, ou un groupe (alkyle)-N(alkyl-OH)₂, l'alkyl étant linéaire ou ramifié et comprenant de 1 à 5 atomes de carbone, de préférence (CH₂-CH₂)-N(CH₂-CH₂-OH)₂, au moins l'un de R² et R³ étant différent de H.

7. Composition selon l'une quelconque des revendications 1 à 6, dans lequel l'alcanolamine est choisie parmi la triisopropanolamine (TIPA), la diisopropanolamine (DIPA), la diéthanolisopropanolamine (DEIPA), l'éthanoldiisopropanolamine (EDIPA), la N,N,N',N'-tetrakis(2-hydroxyethyl)ethylenediamine (THEED) et la methyldiéthanolamine (MDEA).

8. Composition selon l'une quelconque des revendications 1 à 7, dans laquelle l'alcanolamine est choisie parmi la triisopropanolamine (TIPA), la diéthanolisopropanolamine (DEIPA) et l'éthanoldiisopropanolamine (EDIPA).

9. Composition selon l'une quelconque des revendications 1 à 8, dans laquelle l'alcanolamine est la triisopropanolamine (TIPA).

10. Procédé d'utilisation d'alcanolamine secondaire ou tertiaire pour le broyage d'au moins un liant hydraulique comprenant :
- La mise sous forme partiellement salifiée, de préférence à l'aide d'acide inorganique, de l'alcanolamine (A) de façon à obtenir une composition (C) selon l'une des revendications 1 à 9 ;
- L'ajout de la composition (C) dans un broyeur.

11. Procédé d'amélioration des résistances mécaniques d'une composition de liant hydraulique comprenant la mise en oeuvre d'une composition (C) selon l'une quelconque des revendications 1 à 9 au broyage du liant hydraulique.

12. Procédé selon la revendication 10, dans lequel des additifs choisis parmi les alcanolamines autres que celles décrites selon l'une des revendications 1 à 9, les sels tels que le chlorure de sodium, le chlorure de calcium, le thiocyanate de sodium, le thiocyanate de calcium, le nitrate de sodium et le nitrate de calcium et leurs mélanges, les glycols, les glycérols, les adjuvants réducteurs d'eau et haut réducteurs d'eau notamment choisis parmi les sels sulfonés de polycondensés de naphtalène et de formaldéhyde, couramment appelés les polynaphtalènes sulfonates ou encore les superplastifiants à base de naphtalène ; les sels sulfonés de polycondensés de mélamine et de formaldéhyde, appelés couramment les superplastifiants à base de mélamine ; les lignosulfonates ; le gluconate de sodium et le glucoheptonate de sodium ; les polyacrylates ; les polyaryléthers (PAE) ; les produits à base d'acides polycarboxyliques, notamment les copolymères peignes polycarboxylate, qui sont des polymères ramifiés dont la chaîne principale porte des groupes carboxyliques et dont les chaînes latérales sont composées de séquences de type polyéther, en particulier le polyoxyde d'éthylène, comme par exemple le poly [acide (méth)acrylique - greffé - polyoxyde d'éthylène] ; les produits à base de polyphosphonates polyalkoxylés ; les tensioactifs, des acides carboxyliques tels que les acides acétique, adipique, gluconique, formique, oxalique, citrique, maléique, lactique, tartrique, malonique, des retardateurs de prise notamment à base de sucres, mélasse ou vinasse, et leurs mélanges sont utilisés en complément du sel d'alcanolamine.

13. Procédé selon l'une quelconque des revendications 10 à 12, dans lequel un ou plusieurs composés antimousses sont utilisés en combinaison avec le sel d'alcanolamine.

14. Composition comprenant :
- Au moins un liant hydraulique ;
- une composition (C) selon l'une quelconque des revendications 1 à 9
- éventuellement de l'eau et des granulats.

15. Composition selon la revendication 14 comprenant en outre un ou plusieurs composés antimousse.

## Patentansprüche

1. Zusammensetzung (C), umfassend zwischen 10 und 99 Gew.-% sekundäres oder tertiäres Alkanolamin (A) in Form eines Salzes, vorzugsweise eines Salzes einer anorganischen Säure, und zwischen 1 und 90 Gew.-% des Alkanolamins (A), das nicht in ein Salz umgewandelt wurde.

2. Zusammensetzung (C) nach Anspruch 1, umfassend zwischen 50 und 99 Gew.-% sekundäres oder tertiäres Alkanolamin (A) in Form eines Salzes, vorzugsweise eines Salzes einer anorganischen Säure, und zwischen 1 und 50 Gew.-% des Alkanolamins (A), das nicht in ein Salz umgewandelt wurde.

3. Zusammensetzung nach Anspruch 1 oder 2, wobei das Alkanolaminsalz ein Säurehalogenidsalz oder ein Salz von Schwefelsäure, Phosphorsäure, Phosphonsäure oder Hydrogensulfat, Carbonat oder Hydrogencarbonat ist.

4. Zusammensetzung nach einem der Ansprüche 1 bis 3, wobei das Alkanolaminsalz ein Säurehalogenidsalz oder ein Schwefelsäuresalz ist.

5. Zusammensetzung nach einem der Ansprüche 1 bis 4, wobei das Alkanolaminsalz ein Salz der Salzsäure ist.

6. Zusammensetzung nach einem der Ansprüche 1 bis 5, wobei das Alkanolamin ein Alkanolamin der Formel (I) N(R¹OH)(R²)(R³) (I) ist, wobei R¹ gleich oder verschieden ist und eine lineare oder verzweigte Alkylgruppe mit 1 bis 10 Kohlenstoffatomen, vorzugsweise 1 bis 5 Kohlenstoffatomen, darstellt, R²stellt H oder eine R¹-OH-Gruppe dar, R³ stellt H dar, eine lineare oder verzweigte Alkylgruppe mit 1 bis 10 Kohlenstoffatomen, vorzugsweise 1 bis 5 Kohlenstoffatomen, eine R⁴-OH-Gruppe, worin R⁴ eine lineare oder verzweigte Alkylgruppe mit 1 bis 10 Kohlenstoffatomen, vorzugsweise 1 bis 5 Kohlenstoffatomen, darstellt, oder eine (Alkyl)-N(Alkyl-OH)₂-Gruppe, wobei das Alkyl linear oder verzweigt ist und 1 bis 5 Kohlenstoffatome umfasst, vorzugsweise (CH₂-CH₂)-N(CH₂-CH₂-OH)₂, wobei mindestens entweder R² oder R³ von H verschieden ist.

7. Zusammensetzung nach einem der Ansprüche 1 bis 6, wobei das Alkanolamin ausgewählt ist aus Triisopropanolamin (TIPA), Diisopropanolamin (DIPA), Diethanolisopropanolamin (DEIPA), Ethanoldiisopropanolamin (EDIPA), N,N,N',N'-Tetrakis(2-hydroxyethyl)ethylenediamin (THEED) und Methyldiethanolamin (MDEA).

8. Zusammensetzung nach einem der Ansprüche 1 bis 7, wobei das Alkanolamin aus Triisopropanolamin (TIPA), Diethanolisopropanolamin (DEIPA) und Ethanoldiisopropanolamin (EDIPA) ausgewählt ist.

9. Zusammensetzung nach einem der Ansprüche 1 bis 8, wobei das Alkanolamin Triisopropanolamin (TIPA) ist.

10. Verfahren zur Verwendung von sekundärem oder tertiärem Alkanolamin für die Zerkleinerung von mindestens einem hydraulischen Bindemittel, umfassend:
- Alkanolamin (A) teilweise in Salzform bringen, vorzugsweise mit Hilfe von anorganischer Säure, um eine Zusammensetzung (C) nach einem der Ansprüche 1 bis 9 zu erhalten;
- Zugeben der Zusammensetzung (C) in eine Mühle.

11. Verfahren zur Verbesserung der mechanischen Festigkeiten einer hydraulischen Bindemittelzusammensetzung, bei dem eine Zusammensetzung (C) nach einem der Ansprüche 1 bis 9 beim Mahlen des hydraulischen Bindemittels eingesetzt wird.

12. Verfahren nach Anspruch 10, bei dem Zusatzstoffe, ausgewählt aus anderen Alkanolaminen als denen nach einem der Ansprüche 1 bis 9, Salze wie Natriumchlorid, Kalziumchlorid, Natriumthiocyanat, Kalziumthiocyanat, Natriumnitrat und Kalziumnitrat und deren Mischungen, Glykole, Glycerine, wasserreduzierende Hilfsstoffe und Hochreduktionsmittel-Wasserreduzierer, insbesondere ausgewählt aus sulfonierten Salzen von Polykondensaten aus Naphthalin und Formaldehyd, die üblicherweise als Polynaphthalinsulfonate oder auch als Fließmittel auf Naphthalinbasis bezeichnet werden; sulfonierte Salze aus Melamin- und Formaldehyd-Polykondensaten, die üblicherweise als Fließmittel auf Melaminbasis bezeichnet werden; Lignosulfonate; Natriumgluconat und Natriumglucoheptonat; Polyacrylate; Polyarylether (PAE); Produkte auf der Basis von Polycarbonsäuren, insbesondere Polycarboxylat-Kamm-Copolymere, die verzweigte Polymere sind, deren Hauptkette Carboxylgruppen trägt und deren Seitenketten aus Polyetherblöcken bestehen, insbesondere Polyethylenoxid, wie z.B. Poly [(meth)acrylsäure - gepfropft - Polyethylenoxid]; Produkte aus polyalkoxylierten Polyphosphonaten; Tenside, Carbonsäuren wie Essig-, Adipin-, Gluconsäure, Ameisensäure, Oxalsäure, Zitronensäure, Maleinsäure, Milchsäure, Weinsäure, Malonsäure, Abbindeverzögerer insbesondere auf der Basis von Zucker, Melasse oder Vinasse und deren Mischungen als Ergänzung zum Alkanolaminsalz verwendet werden.

13. Verfahren nach einem der Ansprüche 10 bis 12, bei dem eine oder mehrere Entschäumerverbindungen in Kombination mit dem Alkanolaminsalz verwendet werden.

14. Zusammensetzung bestehend aus:
- Mindestens ein hydraulisches Bindemittel;
- eine Zusammensetzung (C) nach einem der Ansprüche 1 bis 9;
- eventuell Wasser und Zuschlagstoffe.

15. Zusammensetzung nach Anspruch 14, die zusätzlich eine oder mehrere Entschäumerverbindungen enthält.

## Claims

1. A composition (C) comprising from 10 to 99 weight % secondary or tertiary alkanolamine (A) in the form of a salt, preferably an inorganic acid salt, and from 1 to 90 weight % of non-salified alkanolamine (A).

2. The composition (C) according to claim 1 comprising from 50 to 99 weight % of secondary or tertiary alkanolamine (A) in the form of a salt, preferably an inorganic acid salt, and from 1 to 50 weight % of non-salified alkanolamine (A).

3. The composition according to claim 1 or 2, wherein the alkanolamine salt is a halide acid salt, or a salt of sulfuric acid, phosphoric acid, phosphonic acid, or a hydrogensulfate, carbonate or hydrogencarbonate salt.

4. The composition according to any of claims 1 to 3, wherein the alkanolamine salt is a halide acid salt or sulfuric acid salt.

5. The composition according to any of claims 1 to 4, wherein the alkanolamine salt is a hydrochloric acid salt.

6. The composition according to any of claims 1 to 5, wherein the alkanolamine is an alkanolamine of formula (I) N(R¹OH)(R²)(R³) (I) wherein the R¹, the same or different, are a linear or branched alkyl group having 1 to 10 carbon atoms preferably 1 to 5 carbon atoms, R² is H or R¹-OH group, R³ is H, a linear or branched alkyl group having 1 to 10 carbon atoms, preferably 1 to 5 carbon atoms, a R⁴-OH group where R⁴ is a linear or branched alkyl group having 1 to 10 carbon atoms, preferably 1 to 5 carbon atoms or an (alkyl)-N(alkyl-OH)₂ group, the alkyl being linear or branched and having 1 to 5 carbon atoms, preferably (CH₂-CH₂)-N(CH₂-CH₂-OH)₂, at least one of R² and R³ differing from H.

7. The composition according to any of claims 1 to 6, wherein the alkanolamine is selected from among triisopropanolamine (TIPA), diisopropanolamine (DIPA), diethanol-isopropanolamine (DEIPA), ethanol-diisopropanolamine (EDIPA), N,N,N',N'-tetrakis(2-hydroxyethyl)ethylenediamine (THEED) and methyldiethanolamine (MDEA).

8. The composition according to any of claims 1 to 7, wherein the alkanolamine is selected from among triisopropanolamine (TIPA), diethanol-isopropanolamine (DEIPA) and ethanol-diisopropanolamine (EDIPA).

9. The composition according to any of claims 1 to 8, wherein the alkanolamine is triisopropanolamine (TIPA).

10. A method of using a secondary or tertiary alkanolamine for grinding at least one hydraulic binder comprising:
- placing the alkanolamine (A) in partially salified form, preferably by means of an inorganic acid, to obtain a composition (C) according to one of claims 1 to 9;
- adding composition (C) to a mill.

11. A method of enhancing the compressive strength of a hydraulic binder composition, comprising the use of a composition (C) according to any of claims 1 to 9 when grinding the hydraulic binder.

12. The method according to claim 10, wherein additives selected from among alkanolamines other than those described in one of claims 1 to 9, salts such as sodium chloride, calcium chloride, sodium thiocyanate, calcium thiocyanate, sodium nitrate and calcium nitrate and mixtures thereof, glycols, glycerols, water-reducing additives and high-range water reducers selected in particular from among sulfonated salts of naphthalene and formaldehyde polycondensates commonly called polynaphthalene sulfonates or naphthalene-based superplasticizers; sulfonated salts of melamine and formaldehyde polycondensates commonly called melamine-based superplasticizers; lignosulfonates; sodium gluconate and sodium glucoheptonate; polyacrylates; polyarylethers (PAE); polycarboxylic acid-based products in particular polycarboxylate comb-copolymers which are branched polymers having a main chain carrying carboxylic groups and side chains composed of polyether-type sequences in particular ethylene polyoxide e.g. poly [(meth)acrylic acid - grafted - ethylene polyoxide]; products based on polyalkoxylated polyphosphonates; surfactants, carboxylic acids such as acetic, adipic, gluconic, formic, oxalic, citric, maleic, lactic, tartaric, malonic acids, setting retardants in particular sugar-, molasses- or vinasse-based, and mixtures thereof are used in addition to the alkanolamine salt.

13. The method according to any of claims 10 to 12 wherein one or more defoamers are used in combination with the alkanolamine salt.

14. A composition comprising:
- at least one hydraulic binder;
- a composition (C) according to any of claims 1 to 9;
- optionally water and aggregates.

15. The composition according to claim 14 further comprising one or more defoamer compounds.
